(19) Europäisches Patentamt
European Patent Office
Office européen des brevets

(11) **EP 3 552 146 B1**

(12) **FASCICULE DE BREVET EUROPEEN**

(45) Date de publication et mention de la délivrance du brevet:
**10.02.2021 Bulletin 2021/06**

(51) Int Cl.:
*G06K 9/00* (2006.01)   *G06K 9/46* (2006.01)
*G06T 7/00* (2017.01)   *G06T 7/77* (2017.01)
*G06T 7/41* (2017.01)   *G06T 7/73* (2017.01)

(21) Numéro de dépôt: **17821977.0**

(22) Date de dépôt: **08.12.2017**

(86) Numéro de dépôt international:
**PCT/FR2017/053457**

(87) Numéro de publication internationale:
**WO 2018/104682 (14.06.2018 Gazette 2018/24)**

(54) **DÉTECTION DE NERFS DANS UNE SÉRIE D'IMAGES ÉCHOGRAPHIQUES**

ERKENNUNG VON NERVEN BEI EINER SERIE VON ECHOGRAFISCHEN BILDERN

DETECTION OF NERVES IN A SERIES OF ECHOGRAPHIC IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2016 FR 1662238**

(43) Date de publication de la demande:
**16.10.2019 Bulletin 2019/42**

(73) Titulaires:
• **Université d'Orléans**
  **45067 Orléans Cedex 2 (FR)**
• **Institut National des Sciences Appliquées**
  **Centre Val de Loire**
  **18022 Bourges Cedex (FR)**

(72) Inventeurs:
• **HAFIANE, Adel**
  **18000 Bourges (FR)**
• **HADJERCI, Oussama**
  **78190 Trappes (FR)**
• **VIEYRES, Pierre**
  **18390 Saint-Germain-du-Puy (FR)**
• **PARMANTIER, Yves**
  **18130 Vornay (FR)**

(74) Mandataire: **Novagraaf Technologies**
  **Bâtiment O2**
  **2, rue Sarah Bernhardt**
  **CS90017**
  **92665 Asnières-sur-Seine Cedex (FR)**

(56) Documents cités:
• **HADJERCI OUSSAMA ET AL: "On-line learning dynamic models for nerve detection in ultrasound videos", 2016 IEEE INTERNATIONAL CONFERENCE ON IMAGE PROCESSING (ICIP), IEEE, 25 septembre 2016 (2016-09-25), pages 131-135, XP033016508, DOI: 10.1109/ICIP.2016.7532333**
• **OUSSAMA HADJERCI ET AL: "Computer-aided detection system for nerve identification using ultrasound images: A comparative study", INFORMATICS IN MEDICINE UNLOCKED, vol. 3, 5 juillet 2016 (2016-07-05), pages 29-43, XP055408259, ISSN: 2352-9148, DOI: 10.1016/j.imu.2016.06.003**
• **O Hadjerci ET AL: "Nerve Localization by Machine Learning Framework with New Feature Selection Algorithm", Image Analysis and Processing - ICIAP 2015, 1 janvier 2015 (2015-01-01), pages 246-256, XP055408986, Cham ISBN: 978-3-319-23231-7 Extrait de l'Internet: URL:http://link.springer.com/content/pdf/1 0.1007/978-3-319-23231-7_23.pdf [extrait le 2017-09-22]**
• **OUSSAMA HADJERCI ET AL: "Nerve Detection in Ultrasound Images using Median Gabor Binary Pattern", NETWORK AND PARALLEL COMPUTING, vol. 8815, 22 octobre 2014 (2014-10-22), pages 132-140, XP055412727, Cham ISSN: 0302-9743 ISBN: 978-3-642-17571-8**

**Description**

DOMAINE DE L'INVENTION

L'invention est relative au domaine de l'analyse d'images numériques issues d'échographies. Elle concerne plus particulièrement la détection automatique d'un nerf dans une série d'images afin d'aider le travail d'un anesthésiste

CONTEXTE DE L'INVENTION

Une anesthésie locorégionale implique d'injecter le produit anesthésiant à proximité d'un nerf du patient. Il est donc important pour l'anesthésiste de disposer d'outil facilitant son travail en lui permettant de localiser précisément les nerfs. Pour ce faire, il dispose d'appareillage lui permettant de visualiser en temps-réel une image échographique de la zone étudiée de l'anatomie du patient. L'anesthésiste peut balayer la zone pour rechercher les nerfs, et déterminer l'endroit approprié pour insérer le produit anesthésiant.

Toutefois, la détection des nerfs dans une image échographique est une tâche malaisée, même pour un anesthésiste expérimenté.

Il est donc intéressant de permettre à l'anesthésiste de disposer d'outils automatiques l'aidant dans sa tâche. L'invention propose un tel outil permettant de détecter les nerfs, automatiquement et en temps réel, dans une série d'image provenant d'une échographie.

Un tel outil doit faire face à la nature même des images échographiques qui comportent un bruit important et de nombreux artefacts liés à l'imagerie échographique. La variabilité des structures nerveuses rend leurs apparences sur les images également très variées et d'autant plus difficile un processus de détection automatique.

En outre, du fait de la criticité du travail de l'anesthésiste, le procédé automatique doit être suffisamment robuste pour minimiser les erreurs, malgré la qualité mauvaise des images échographiques, qu'il s'agisse de sur-détection ou de sous-détection.

L'invention a donc pour but de fournir un procédé de détection automatique, présentant des performances améliorant les techniques existantes et facilitant grandement le travail de l'anesthésiste.

RESUME DE L'INVENTION

A cette fin, la présente invention propose un procédé de détection d'un nerf dans une série d'images échographiques comportant, pour chaque image de ladite série :

- une étape de génération d'une carte de probabilités sur des régions de ladite image, consistant à appliquer une pluralité de descripteurs de textures afin de générer pour chaque pixel desdites régions, un vecteur déterminant la réponse dudit pixel pour chacun des descripteurs de ladite pluralité, puis à en déduire une probabilité pour chaque pixel d'appartenir à un nerf en fonction d'un modèle probabiliste ;
- une étape de classification appliquée sur des zones déterminées par ladite carte de probabilité, consistant à rechercher des modèles, chacun correspondant à un type de nerf, dans une fenêtre glissant sur lesdites zones, à accorder un degré de confiance à chaque position de ladite fenêtre pour chaque modèle et à retenir une position optimale pour chaque modèle ; puis à analyser la consistance de ces positions optimales en mesurant leur stabilité sur un ensemble d'images de ladite série afin de sélectionner la fenêtre présentant la consistance maximale, ladite fenêtre correspondant à nerf détecté.

Suivant des modes de réalisation préférés, l'invention comprend une ou plusieurs des caractéristiques suivantes qui peuvent être utilisées séparément ou en combinaison partielle entre elles ou en combinaison totale entre elles :

- le procédé comporte en outre une étape d'extraction de contour dudit nerf détecté au sein de ladite fenêtre ;
- le procédé comporte une étape de prétraitement pour produire lesdites régions, en éliminant d'autres régions ne pouvant pas correspondre à un nerf ;
- ladite étape de prétraitement comprend l'élimination de zones correspondant à la peau de ladite image ;
- ladite étape de prétraitement comprend l'élimination de zones ne correspondant pas à des tissus hyperéchogènes ;
- ledit modèle probabiliste est un modèle de mélanges gaussiens ;
- lesdits descripteurs sont basés sur des filtres de Gabor. ;
- lesdits descripteurs sont des descripteurs de texture binaire médiane adaptatif, AMBP ;
- dans l'étape de classification, lesdits modèles sont construits par une méthode des séparateurs à vaste marge ;

Un autre objet de l'invention est relatif à un programme d'ordinateur comportant du code exécutable par un équipement numérique pour mettre en œuvre le procédé tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES DESSINS

La figure 1 représente schématiquement la chaîne de traitement selon un mode de réalisation de l'invention.

La figure 2 représente schématiquement un exemple de mise en œuvre de l'étape de génération d'une carte de probabilité.

La figure 3 représente schématiquement un exemple pour le calcul d'un descripteur de texture binaire médiane, selon un mode de réalisation de l'invention.

La figure 4 représente schématiquement un exemple de mise en œuvre de l'étape de classification.

DESCRIPTION DETAILLEE DE L'INVENTION

En pratique, l'anesthésiste balaye une zone du corps du patient avec une sonde échographique afin de repérer les nerfs et déterminer la zone où procéder à l'injection du produit anesthésiant. L'appareillage échographique fonctionne de façon continue et génère un flux d'images (c'est-à-dire une vidéo) qui sont affichés en temps-réel sur un moniteur à disposition de l'anesthésiste, ou d'un autre praticien (chirurgien, etc.). Ainsi, le balayage exercé par l'anesthésiste peut se faire en fonction de ce qu'il visualise sur le moniteur.

Le procédé selon l'invention repose sur une chaîne de traitement prenant en entrée le flux d'images échographiques et fournissant en sortie une détection de nerf sur ce flux.

Typiquement, cette détection peut consister à la mise en exergue des nerfs en surexposition sur le flux d'images échographiques affiché sur le moniteur. Par exemple, cette mise en exergue peut consister à entourer le nerf détecté, ou bien à en délimiter précisément les contours. Elle peut se faire en couleur, afin de faciliter plus encore la tâche du praticien.

La détection doit donc se faire en temps-réel puisqu'elle doit être reflétée sur le moniteur permettant la visualisation des images échographiques et qu'elle doit guider l'action du praticien.

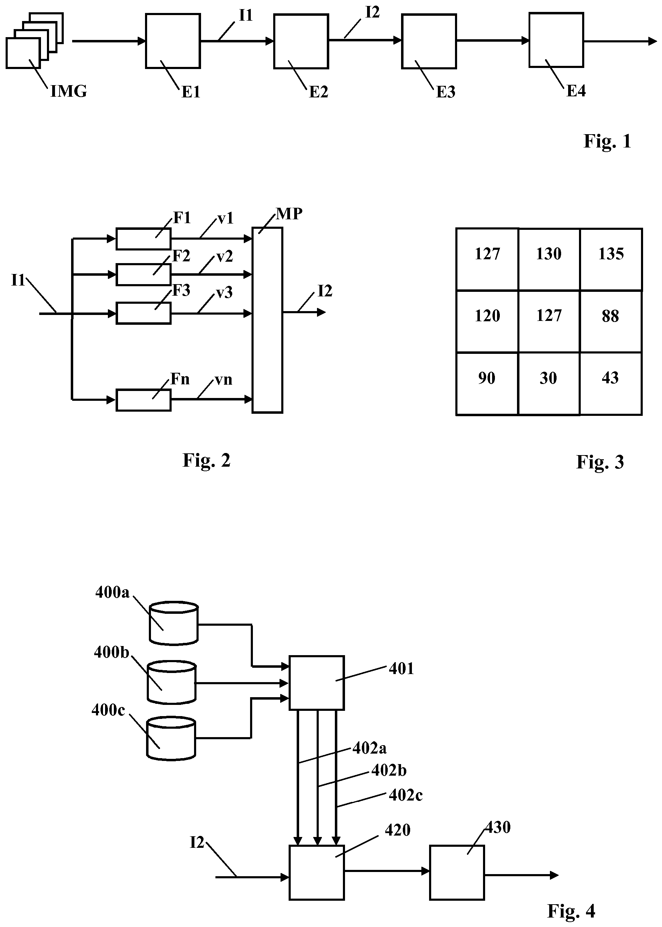

La figure 1 illustre la chaîne de traitement selon l'invention.

Une première étape E1 peut consister à effectuer un prétraitement sur les images IMG issues de l'acquisition échographique, visant à réduire l'effet du bruit et à éliminer certaines régions des images qui peuvent être facilement écartées car ne pouvant pas contenir un nerf, afin de réduire le volume de données sur lequel seront appliquées les étapes ultérieures de la chaîne de traitement.

Cette première étape peut elle-même comporter deux traitements distincts, appliqués à chaque image du flux IMG :

Selon le type de bloc de nerfs visé, on peut avoir un premier traitement qui consiste à extraire les tissus hyperéchogènes. En médecine, on parle d'un organe ou d'une structure hyperéchogène lorsqu'il/elle apparaît particulièrement blanche sur une échographie. Cette blancheur se doit à une plus grande réflexion des ultrasons. Dans une image échographique, les nerfs apparaissent comme des structures hyperéchogènes et hypo-échogène, de formes plus ou moins arrondies ou ovales, constituant sorte de nid d'abeilles avec une texture particulière. Pour plusieurs type de nerfs (sciatique, médian, l'ulnaire, cette texture tends vers un aspect visuel hyperéchogène. Aussi, l'extraction des tissus hyperéchogènes permet de garantir la sélection des zones susceptibles de contenir des nerfs, tout en écartant les zones non hyperéchogènes et donc en limitant le volume à traiter par la suite.

Pour ce faire, plusieurs techniques sont possibles. Le choix d'une technique peut dépendre de différents facteurs, dont le type de sonde échographique utilisé, qui influe sur les caractéristiques des images générées.

Par exemple, un filtrage gaussien peut être appliqué dans un premier temps afin de réduire le bruit, puis un algorithme de partitionnement en k-moyennes (ou « *k-means* » en langue anglaise) ou un seuillage adaptatif peuvent être appliqués afin de classer chaque pixel de l'image traité dans une parmi deux catégories : l'avant-plan, correspondant à des zones hyperéchogènes, et l'arrière-plan.

Un second traitement peut ensuite être appliqué à l'image afin d'éliminer des zones qui peuvent être écartés pour des raisons plus « sémantiques ». Notamment, l'image échographique traitée ayant pour fin l'injection d'un produit anesthésiant, elle représente une région nécessairement proche de la peau. Or, le derme et l'épiderme présentent des caractéristiques hyperéchogènes proches de celle des nerfs. Il est donc intéressant de pouvoir extraire la zone correspondant à l'épiderme et au derme (c'est-à-dire à la peau) afin de faciliter les traitements ultérieurs et d'éviter les ambiguïtés entre nerfs et peau.

Cette zone de peau peut être éliminée en utilisant des informations anatomiques : on sait en effet que dans l'image échographique, la peau se situe vers le bord haut de l'image et possède une profondeur de plusieurs millimètres, correspondant à une dizaine de pixels environ.

On peut ainsi extraire cette région, qui peut correspondre à une bande d'une hauteur d'environ une dizaine de pixels, le long du bord haut de l'image.

Ce prétraitement est intéressant car il réduit les erreurs de détection ainsi que le temps nécessaire pour les traitements ultérieurs.

La seconde étape E2 consiste à générer une carte de probabilité à partir des images I1 issues du prétraitement, c'est-à-dire en ne considérant que les pixels classifiés comme appartenant à une région « hyperéchogènes » non exclue comme appartenant à la zone de peau.

Ce prétraitement E1 a en effet réduit une partie d'informations inutiles dans l'image, c'est-à-dire de pouvant pas correspondre à un nerf, mais il n'est pas possible par ce prétraitement E1 d'isoler les nerfs.

Dans cette étape E2, une approche basée sur les probabilités est utilisée afin d'établir une carte indiquant les zones susceptibles de correspondre à un nerf.

Pour ce faire, les caractéristiques de texture correspondant aux nerfs sont utilisées. Chaque type de nerfs (médians, sciatiques...) peuvent présenter des textures distinctes sur une image échographique, mais avec une certaine variabilité, cette variabilité étant augmenté encore par le bruit inhérent à la technique de l'échographie.

Des descripteurs de textures présentant de bonnes performances et une bonne résistance au bruit sont utilisés. Chaque type de nerf pouvant présenter des aspects différents sur une image échographique, on peut établir un ensemble de modèles, chaque étant associé à un descripteur donné.

Par conséquent, ainsi qu'illustré sur la figure 2, des descripteurs distincts F1, F2, F3... Fn sont appliqués à chaque pixel de l'image prétraitée Il (c'est-à-dire dont on a déjà exclu des pixels), donnant chacun, respectivement, une réponse représentative de l'appartenance dudit pixel à une texture associée à un type de nerf donné.

La réponse de chaque filtre est un vecteur de valeurs numériques, respectivement v1, v2, v3...vn.

Il est alors possible d'établir une probabilité qu'un pixel donné appartienne, ou non, à un nerf en utilisant ces vecteurs.

Plus précisément, les descripteurs peuvent combiner et utiliser les avantages de différentes techniques de représentation de la texture : filtres de Gabor, ondelettes, motifs locaux, descripteurs statistiques,...

L'article « Computer-aided détection system for nerve identification using ultrasound images : a comparative study » de Oussama Hadjerci, Adel Hafiane, Donatello Conte, Pascal Makris, Pierre Vieryres et Alain Delbos, in Informatics in Medecing Unlocked 3, 2016, pp. 29-43, dresse un tableau comparatif d'un grand nombre de descripteurs possibles, appliqués au cas particulier de la détection des nerfs L'article "On-line leaming dynamic models for nerve détection in ultrasound videos" de Hadjerci et al. (IEEE, ICIP 2016, pp. 131-135) divulgue par exemple une méthode de reconnaissance de nerfs à partir de ces mêmes descripteurs.

Parmi ces descripteurs, on peut notamment citer les descripteurs de texture binaire médiane adaptatif, ou AMBP, dans l'article « Adaptive Median Binary Patterns for Texture Classification », de A. Hafiane, K. Palaniappan, G. Seetharamn, in Pattern Recognition (ICPR), 2014, 22nd International Conference,

A titre d'exemple, on peut également citer les filtres de Gabor, qui peuvent être combinés avec des descripteurs de texture de type « MBP », que nous allons décrire plus précisément.

Les filtres de Gabor sont intéressants car ils tendent à réduire les effets négatifs du bruit dans l'image traitée, car ils sont basés sur un filtrage passe-bande. Pour certains types de nerfs, ils peuvent remplir un rôle intéressant. Toutefois, une approche purement fréquentielle ne peut être suffisante pour caractériser l'empreinte d'un nerf dans l'image, et il est plus intéressant de combiner l'analyse fréquentielle apportée par les filtres de Gabor avec d'autres types d'informations tirés des textures.

Les méthodes basées sur les textures binaires locales, ou LBP pour « Local Binary Patterns », en langue anglaise, permettent d'améliorer la caractérisation des textures en général, et des textures de nerfs en particulier. Ces LBP ont été décrits notamment dans l'article « Multiresolution gray-scale and rotation invariant texture classification with local binary patterns » de T. Ojala, M. Pietikäinen et T. Mäenpää, dans IEEE Trans. Pattern Analysis and Machine Intelligence, vol. 24, no. 7, pp. 971-987, 2002

Le principe du calcul d'un descripteur LBP se base sur deux étapes principales : l'extraction d'un texton, c'est-à-dire d'une texture binaire, ou texel, d'une structure spéciale élémentaire locale, puis l'analyse de la distribution des histogrammes de ces textons.

Cette approche peut être combinée avec les filtres de Gabor, ainsi qu'exposé notamment dans l'article « Local Gabor binary-pattern histogram sequence (lgbphs): a novel non-statistical model for face représentation and recognition », de W. Zhang, S. Shan, W. Gao, X. Chen et H. Zhang, dans IEEE International Conf. Computer Vision, pages 786-791, 2005.

Cette approche combinée, appelée depuis « *Local Gabor Binary Pattern* », LGBP, possède des performances intéressantes, mais pas suffisamment pour la détection des nerfs dans des images échographiques, du fait de l'importance du bruit.

La technique LBP a été améliorée pour augmenter sa robustesse au bruit, pour donner le MBP, « *Médian Binary Pattern* » qui a été par exemple décrit dans l'article « Médian binary pattern for textures classification », de A. Hafiane, G. Seetharaman, K. Palanaiappan et B. Zavidovique, dans Lecture Notes in Computer Science (ICIAR), vol. 5112, pages 619-629, 2008.

Le descripteur de textures binaires médianes, MBP, est déterminé par la mise en correspondance entre l'espace des intensités de l'image (valeurs des pixels) avec une texture binaire locale, en seuillant les pixels par la valeur médiane d'un voisinage centré sur le pixel courant. C'est ce seuillage avec une valeur médiane qui distingue le descripteur MBP du descripteur LBP dans lequel le seuillage est effectué par rapport à la valeur du pixel central.

La figure 3 illustre un exemple pour le calcul d'un MBP avec un voisinage typique de 9 pixels (3x3). La valeur médiane $\tau$ est de 120. Chaque pixel $b_k$ du voisinage est alors comparé à cette valeur médiane et est seuillé de façon binaire. Les valeurs ainsi calculées peuvent être considérées sous la forme d'un vecteur binaire ou sous une forme scalaire :

$$MBP(x,y) = \sum_{k=0}^{L-1} 2^k H(b_k - \tau) \qquad (1)$$

dans cette équation, L est la taille du voisinage (L=9 dans l'exemple), $b_k$ est la valeur du pixel k dans ce voisinage, $\tau$ est la valeur médiane sur le voisinage, et MBP(x,y) représente donc le descripteur MBP du pixel de coordonnées x,y.

Ainsi chaque pixel de l'image (non écarté par l'étape de prétraitement EI) est mis en correspondance avec une valeur MBP(x,y) de L bits.

Le MBP peut être combiné avec les filtres de Gabor afin de produire une nouvelle technique de caractérisation : MGBP pour « *Médian Gabor Binary Pattern* ».

Pour déterminer le descripteur MGBP du pixel de position (x,y), dans un premier temps, on convole l'image avec le noyau de chacun des filtres de Gabor.

Les noyaux sont donnés par l'expression :

$$g(x,y) = \exp\left[ -\frac{1}{2}\left( \frac{x'^2}{\sigma_x^2} + \frac{y'^2}{\sigma_y^2} \right) \right] \times \cos(2\pi f x')$$

dans laquelle

$$x' = x\cos\phi + y\sin\phi$$

$$y' = -x\sin\phi + y\cos\phi$$

où $\phi$, $\sigma$ et f définissent le filtre de Gabor, avec $\phi$ la direction du filtre, $\sigma$ la déviation standard de l'enveloppe gaussienne et f la fréquence de l'onde en cosinus.

La magnitude z(x,y) de la réponse de l'image au filtre de Gabor est alors donnée par :

$$z(x,y) = \left| I(x,y) \times g(x,y) \right|$$

où I(x,y) représente la valeur du pixel de coordonnée (x,y) dans l'image prétraitée I et g(x,y) est la valeur du noyau du filtre de Gabor aux coordonnées (x,y).

On peut ensuite appliquer les principes des descripteurs MBP à l'espace de la réponse au filtre de Gabor. En reprenant l'expression (1) donnée ci-dessus, on obtient alors :

$$MGBP(x,y) = \sum_{k=0}^{L-1} 2^k H(z_k - \bar{z})$$

dans laquelle $\bar{z}$ représente la valeur médiane de la réponse au filtre de Gabor sur le voisinage de L voisins autour du point de coordonnées (x,y)

On peut déterminer ainsi un descripteur MGBP, formant un nombre binaire de L bits (typiquement de 9 bits), pour chaque pixel de l'image et pour chaque filtre de Gabor.

On obtient ainsi pour chaque pixel, un vecteur V(x,y) formé des différentes valeurs de chaque descripteur ou filtre aux coordonnées (x,y) :

$$V(x,y) = [v_1(x,y), v_2(x,y), v_3(x,y)\ldots v_n(x,y)]^T$$

où n est le nombre de descripteurs MGBP.

Comme évoqué précédemment, un tel vecteur peut être obtenu par d'autres techniques et d'autres descripteurs de textures.

A partir de ces vecteurs, on peut construire un modèle probabiliste, permettant de d'établir la probabilité qu'un pixel corresponde à un nerf ou non. Une mise en œuvre de cette étape consiste à utiliser un modèle de mélanges gaussiens (GMM, ou « *Gaussian Mixture Model* » en langue anglaise). Un modèle de mélange gaussien est un modèle statistique exprimé selon une densité mélange. Il sert usuellement à estimer de façon paramétrique la distribution de variables aléatoires en les modélisant comme une somme de plusieurs gaussiennes (appelées noyaux). Il s'agit alors de déterminer la variance, la moyenne et l'amplitude de chaque gaussienne. Ces paramètres sont optimisés selon un critère de maximum de vraisemblance pour approcher le plus possible la distribution recherchée. Cette technique est appropriée à la variabilité de la région d'un nerf.

Une phase d'apprentissage est nécessaire pour construire ce modèle de mélanges gaussiens et calculer ses paramètres. Cette procédure peut être effectuée itérativement via l'algorithme espérance-maximisation (EM).

Une fois la phase d'apprentissage achevée, on peut utiliser le modèle obtenu pour calculer la probabilité de chaque pixel de correspondre à un nerf. Les valeurs v1, v2, v3...vn issues des filtres F1, F2, F3...Fn sont ainsi prises en entré d'un module de calcul de probabilité MP et il résulte de cette étape E2 une carte de probabilités I2, associant pour chaque pixel des images traitées une probabilité d'appartenance à un nerf. Les zones exclues par l'étape de prétraitement E1 peuvent être exclues de cette carte de probabilité ou bien être automatiquement affectées d'une probabilité nulle dans cette carte.

Selon l'invention, une troisième étape E3 est déclenchée ensuite, en se basant sur les résultats de la deuxième étape E2, c'est-à-dire sur la carte de probabilités I2.

Plus précisément, cette troisième étape consiste à rechercher les nerfs par un algorithme de classification dans des zones déterminées par la carte de probabilité. De cette façon, la zone de recherche est considérablement réduite aux zones de l'image correspondant à une valeur élevée dans la carte de probabilité, c'est-à-dire les plus susceptibles de correspondre à un nerf. On peut par exemple fixer à 70% ou 80% le seuil au-dessus duquel une zone de la carte de probabilité peut être transmise à l'étape suivante E3 pour traitement.

Ceci permet bien évidemment de réduire le temps de calcul, mais aussi d'améliorer les performances du processus global en réduisant les erreurs de détection.

Différents mécanismes de classification (ou « classifieurs ») peuvent être utilisés. Ces mécanismes de classification peuvent notamment se baser sur des mécanismes d'apprentissage automatiques qui permettent de déterminer des modèles à partir d'un jeu d'apprentissage. La confrontation des nouvelles cartes de probabilité à cet ensemble de modèle, au moyen d'une fenêtre glissante, permet ensuite de déterminer les nerfs dans les images soumises.

Parmi les mécanismes de constitution des modèles et de classification, plusieurs techniques d'apprentissage automatiques peuvent être utilisées.

On peut par exemple citer l'apprentissage profond, ou « *Deep Learning* » en langue anglaise. Cette dénomination recouvre un ensemble de méthodes d'apprentissage automatique tentant de modéliser avec un haut niveau d'abstraction des données grâce à des architectures permettant la mise en œuvre de différentes transformations non linéaires.

Les techniques d'apprentissage profond recouvrent différentes familles de techniques, parmi lesquelles on peut citer l'apprentissage automatique et les réseaux neuronaux.

L'apprentissage automatique, ou « *Machine Learning* » en langue anglaise, est un sous-domaine de l'intelligence artificielle ayant vu le jour dans les années 1950. Il recouvre des systèmes constitués de paramètres réglables, typiquement considérés sous la forme de valeurs vectorielles, en vue de fournir la sortie attendue pour une série de valeurs données en entrée. Ce type d'apprentissage se distingue par sa capacité à ajuster ses paramètres de manière autonome, en se basant sur l'expérience des données précédemment traitées.

D'une façon générale, appliquée à des images, et à la situation de l'invention, ces techniques reposent sur deux phases :

- Une extraction des caractéristiques de l'image traitée ;

- Une classification qui fournit une classe, en association avec l'image traitée.

En général, le classifieur détermine la classe selon une somme pondérée des composantes du vecteur de caractéristiques. Une valeur seuil est fixée de sorte que la sortie soit activée ou non en fonction du calcul précédent. Lorsque des erreurs sont repérées en sortie, cet algorithme va réajuster ses paramètres internes en vue d'améliorer les réponses suivantes. On parle alors d'entrainement.

Les réseaux de neurones permettent des classifications non-linéaires et notamment de résoudre ainsi l'impossibilité des classifieurs linéaires de déterminer des classes non linéairement séparables. Les réseaux de neurones sont des architectures, typiquement en successions de couches, de neurones formels. On appelle typiquement couche d'entrée la première couche du réseau, couches cachées les couches internes du réseau, et couche de sortie la dernière couche. Les neurones de couches successives sont connectés par des liens pondérés, et les poids permettent de propager le signal d'entrée et de le « traiter » afin d'aboutir au résultat de la classification sur la couche de sortie.

Le calcul des poids se fait par apprentissage, par exemple par rétro-propagation des erreurs. Dans chaque couche, les neurones estiment une erreur locale, et répercutent le gradient de l'erreur sur la couche antérieure. A chaque itération, l'erreur globale est déterminée sur la couche de sortie et propagée vers les niveaux inférieurs. Ces mécanismes sont par exemple décrits dans les articles de Yann Le Cun.

Un autre exemple est fourni par la méthode des séparateurs à vaste marge (SVM), ou machines à vecteur de support (« *Support Vector Machine* », SVM, en langue anglaise). Il s'agit d'un ensemble de techniques d'apprentissage supervisé destinées à résoudre des problèmes de discrimination et de régression. Les SVM sont une généralisation des classifieurs linéaires. Les SVM ont été développés dans les années 1990 à partir des considérations théoriques de Vladimir Vapnik sur le développement d'une théorie statistique de l'apprentissage : la théorie de V apnik-Chervonenkis.

Les séparateurs à vastes marges reposent sur deux idées clés : la notion de marge maximale et la notion de fonction noyau, qui permettent de traiter des problèmes de discrimination non linéaire, et de reformuler le problème de classement comme un problème d'optimisation quadratique.

La marge est la distance entre la frontière de séparation et les échantillons les plus proches. Ces derniers sont appelés vecteurs supports. Dans les SVM, la frontière de séparation est choisie comme celle qui maximise la marge. Ce choix est justifié par la théorie de Vapnik-Chervonenkis (ou théorie statistique de l'apprentissage), qui montre que la frontière de séparation de marge maximale possède la plus petite capacité. Le problème est de trouver cette frontière séparatrice optimale, à partir d'un ensemble d'apprentissage. Ceci est fait en formulant le problème comme un problème d'optimisation quadratique, pour lequel il existe des algorithmes connus.

Afin de pouvoir traiter des cas où les données ne sont pas linéairement séparables, la deuxième idée clé des SVM est de transformer l'espace de représentation des données d'entrées en un espace de plus grande dimension (possiblement de dimension infinie), dans lequel il est probable qu'il existe une séparatrice linéaire. Ceci est réalisé grâce à une fonction noyau, qui doit respecter les conditions du théorème de Mercer, et qui a l'avantage de ne pas nécessiter la connaissance explicite de la transformation à appliquer pour le changement d'espace. Les fonctions noyau permettent de transformer un produit scalaire dans un espace de grande dimension, ce qui est coûteux, en une simple évaluation ponctuelle d'une fonction.

La figure 4 schématise les mécanismes de cette étape E3 selon un mode de réalisation.

Un jeu d'apprentissage 400a, 400b, 400c d'images est constitué, représentatif de plusieurs types de nerfs. Typiquement, ce jeu est constitué de N sous-jeux 400a, 400b, 400c, chacun représentant un type de nerfs donné et devant générer un modèle distinct, respectivement 402a, 402b, 402c.

Les sous-jeux peuvent comprendre un assez grand nombre d'échantillons afin de permettre la généralisation par le système d'apprentissage. Ce mécanisme est justifié par le fait qu'un même type de nerf peut présenter différents aspects visuels sur une image échographique, notamment en fonction des patients, de la position de la sonde échographique, etc.

Selon un mode de réalisation, ces modèles 402a, 402b, 402c sont générés par la technique SVM, en utilisant des noyaux gaussiens, mise en œuvre par le module d'apprentissage 401.

Ensuite, pour détecter un nerf, le classifier 420 utilise une fenêtre glissante sur l'image 410, pour comparer son contenu à chacun des modèles 402a, 402b, 402c.

Pour chaque position de la fenêtre glissante, on calcule la distance de son contenu à l'hyperplan correspondant à chacun de ces modèles. Plus cette distance est importante et plus on accorde un degré de confiance à sa classification. Pour chaque modèle, on ne retient à la fin que la position de la fenêtre ayant fourni une classification comme nerf avec le degré de confiance le plus élevé.

La fenêtre glissante parcourt l'ensemble de la carte de probabilité I2, de sorte qu'à la fin du processus, on obtient une position par modèle appris 402a, 402b, 402c

L'étape suivante 430 consiste à utiliser l'information temporelle pour analyser l'évolution de ces positions, dans le flux d'images échographiques. Comme on l'a vu, la capture échographique se fait par une sonde qui génère un flux d'images. Dans les étapes précédentes, les traitements ont porté sur une seule image. Or, l'utilisation de l'information temporelle, donc la prise en compte du fait que l'on dispose d'un flux d'images, peut apporter une amélioration de la précision et de l'efficacité du procédé selon l'invention.

L'idée est ici d'analyser la consistance de la détection de la position des fenêtres (pour chaque modèle) en fonction du temps : si cette position reste stable dans le temps, alors on peut considérer que la position détectée est bonne et y attribuer une forte probabilité. Si, au contraire, on observe une inconsistance dans la détection de la position de la fenêtre, alors cette détection doit être pénalisé par une probabilité (ou indice de confiance) plus faible. Ceci sous réserve que l'anesthésique balaye des zones restreintes du corps humain.

On peut utiliser le principe du vote majoritaire: si la majorité des fenêtres se chevauchent au minimum de 50% (par exemple) sur une position et restent stables sur une période de temps, la localisation du nerf est considérée comme fiable. Cette période de temps forme une fenêtre temporelle précédant l'instant présent, sur laquelle porte l'analyse, qui doit être cohérente avec les mouvements que le praticien ait amené à faire avec la sonde échographique.

Cette étape permet ainsi d'écarter des fenêtres déterminées qui ne présentent pas un degré de cohérence temporelle suffisant. Elle permet également de sélectionner la fenêtre temporelle qui présente la cohérence temporelle la plus élevée.

Différentes mises en œuvre sont possibles pour combiner les degrés de confiance déterminés pour chaque fenêtre et la cohérence temporelle. Il peut par exemple s'agir d'une simple multiplication des probabilités (degré de confiance x cohérence temporelle), auxquelles on peut éventuellement attachés des poids différents. Toutefois d'autres mises en œuvre sont possibles.

L'étape suivante, E4, consiste à extraire le contour du nerf. La détermination d'une fenêtre dans laquelle s'inscrit le nerf peut éventuellement suffire pour aider le praticien dans sa tâche, mais il peut être avantageux de délimiter plus précisément les contours du nerf.

Le traitement numérique de délimitation du nerf est évidement appliqué uniquement à la fenêtre dans lequel le nerf a été détecté à l'issue de l'étape E3 précédente. Ce traitement numérique s'applique donc sur un volume limité de données numériques.

Différentes techniques peuvent être utilisées pour délimiter le nerf au sein de la fenêtre.

On peut par exemple citer les techniques de seuillage adaptatif qui présentent l'avantage d'être très rapides au détriment d'une précision moyenne.

Plus précisément, on peut citer les techniques par contours actifs. Les contours actifs, également souvent nommés « *snake* » (pour serpent), sont des modèles dynamiques déformables formés d'une série de points mobiles répartis le long d'une courbe en deux dimensions dans le plan de l'image traitée. La courbe est initialement placée dans la fenêtre délimitant le nerf que l'on cherche à délimiter. De façon itérative, la courbe est modifiée selon un comportement régi par des équations d'évolution : la courbe se déplace, itération après itération, et converge vers le contour du nerf.

Les équations de comportement possèdent plusieurs paramètres déterminant le comportement du contour actif, tels son élasticité, sa tolérance au bruit, etc. Elles définissent la dynamique du contour en se basant sur une notion d'énergie interne et externe que l'algorithme d'évolution cherche à minimiser. Des contraintes permettent de conserver une courbe lisse avec des points équidistants tout en laissant la possibilité de déformations au contour. L'énergie interne correspond à la morphologie et aux caractéristiques de la courbe (courbure, longueur...). L'énergie externe provint de l'image traitée et peut être provoquée par le bruit, la présence de bords contrastés, etc. Dans le cadre d'une mise en œuvre de l'invention, le contour actif est appliqué sur la carte de probabilité, dans une zone délimitée par l'étape E3, et ce sont donc les probabilités qui génèrent l'énergie externe du contour actif.

En particulier, des techniques de type PGVF, pour « Phase-based probabilistic active contour » peuvent être employées, telles que décrites dans l'article « Phase-based probabilistic active contour for nerve détections in ultrasound images for régional anesthesia » de A. Hafiane, P. Vieyres et A. Delbos, in Computers in Biology and Medecine, volume 52, 2014, pp. 88-95

## Revendications

**1.** Procédé de détection d'un nerf dans une série d'images échographiques comportant, pour chaque image de ladite série :

- une étape de génération (E2) d'une carte de probabilités sur des régions de ladite image, consistant à appliquer une pluralité de descripteurs de textures afin de générer pour chaque pixel desdites régions, un vecteur déterminant la réponse dudit pixel pour chacun des descripteurs de ladite pluralité, puis à en déduire une probabilité pour chaque pixel d'appartenir à un nerf en fonction d'un modèle probabiliste ;
- une étape de classification (E3) appliquée sur des zones déterminées par ladite carte de probabilité, consistant à rechercher des modèles, chacun correspondant à un type de nerf, dans une fenêtre glissant sur lesdites zones, à accorder un degré de confiance à chaque position de ladite fenêtre pour chaque modèle et à retenir une position optimale pour chaque modèle ; puis à analyser la consistance de ces positions optimales en mesurant leur stabilité sur un ensemble d'images de ladite série afin de sélectionner la fenêtre présentant la consistance maximale, ladite fenêtre correspondant à un nerf détecté.

2. Procédé selon la revendication précédente comportant en outre une étape d'extraction de contour (E4) dudit nerf détecté au sein de ladite fenêtre.

3. Procédé selon l'une des revendications précédentes, comportant une étape de prétraitement (E1) pour produire lesdites régions, en éliminant d'autres régions ne pouvant pas correspondre à un nerf.

4. Procédé selon la revendication précédente, dans lequel ladite étape de prétraitement (E1) comprend l'élimination de zones correspondant à la peau de ladite image.

5. Procédé selon l'une des revendications 3 ou 4, dans lequel ladite étape de prétraitement comprend l'élimination de zones ne correspondant pas à des tissus hyperéchogènes.

6. Procédé selon l'une des revendications précédentes, dans lequel ledit modèle probabiliste est un modèle de mélanges gaussiens.

7. Procédé selon l'une des revendications précédentes, dans lequel lesdits descripteurs sont basés sur des filtres de Gabor.

8. Procédé selon l'une des revendications 1 à 7, dans lequel lesdits descripteurs sont des descripteurs de texture binaire médiane adaptatif, AMBP.

9. Procédé selon l'une des revendications précédentes, dans lequel dans l'étape de classification (E3), lesdits modèles sont construits par une méthode des séparateurs à vaste marge.

10. Programme d'ordinateur comportant du code exécutable par un équipement numérique pour mettre en œuvre le procédé selon l'une des revendications précédentes.

**Patentansprüche**

1. Verfahren zur Erkennung eines Nervs in einer Reihe von Ultraschallbildern, für jedes Bild der Reihe Folgendes beinhaltend:

- einen Schritt des Erzeugens (E2) einer Wahrscheinlichkeitskarte in Bereichen des Bildes, darin bestehend, eine Vielzahl von Texturdeskriptoren anzuwenden, um für jedes Pixel der Bereiche einen Vektor zu erzeugen, der die Antwort des Pixels für jeden der Deskriptoren der Vielzahl bestimmt, daraus danach in Abhängigkeit von einem probabilistischen Modell eine Wahrscheinlichkeit für jedes Pixel abzuleiten, einem Nerv anzugehören;
- einen Schritt des Klassifizierens (E3), der auf Zonen angewandt wird, die durch die Wahrscheinlichkeitskarte bestimmt werden, darin bestehend, nach Modellen, die jeweils einem Nerventyp entsprechen, in einem Fenster zu suchen, das über die Zonen gleitet, jeder Position des Fensters für jedes Modell einen Vertrauensgrad beizumessen, und eine optimale Position für jedes Modell zu behalten; danach die Beschaffenheit dieser optimalen Positionen durch Messen ihrer Stabilität in einem Verbund von Bildern der Reihe zu analysieren, um das Fenster auszuwählen, welches die maximale Beschaffenheit aufweist, wobei das Fenster einem erkannten Nerv entspricht.

2. Verfahren nach dem vorstehenden Anspruch, das weiter einen Schritt des Extrahierens einer Kontur (E4) des innerhalb des Fensters erkannten Nervs beinhaltet.

3. Verfahren nach einem der vorstehenden Ansprüche, das einen Schritt des Vorbearbeitens (E1) zur Schaffung der Bereiche beinhaltet, indem andere Bereiche, die keinem Nerv entsprechen können, eliminiert werden.

4. Verfahren nach dem vorstehenden Anspruch, wobei der Schritt des Vorbearbeitens (E1) das Eliminieren von Zonen umfasst, die der Haut des Bildes entsprechen.

**5.** Verfahren nach einem der Ansprüche 3 oder 4, wobei der Schritt des Vorbearbeitens das Eliminieren von Zonen umfasst, die keinen hyperechogenen Geweben entsprechen.

**6.** Verfahren nach einem der vorstehenden Ansprüche, wobei das probabilistische Modell ein Gaußsches Mischmodell ist.

**7.** Verfahren nach einem der vorstehenden Ansprüche, wobei die Deskriptoren auf Gabor-Filtern basieren.

**8.** Verfahren nach einem der Ansprüche 1 bis 7, wobei die Deskriptoren Adaptive Median Binary Pattern-, EMBP-Deskriptoren sind.

**9.** Verfahren nach einem der vorstehenden Ansprüche, wobei die Modelle im Schritt des Klassifizierens (E3) durch eine Methode mit großer Beurteilungsmarge aufgebaut werden.

**10.** Computerprogramm, das einen Code beinhaltet, der durch ein digitales Gerät ausführbar ist, um das Verfahren nach einem der vorstehenden Ansprüche umzusetzen.


**Claims**

**1.** A method of detecting a nerve in a series of echographic images comprising, for each image of said series:

- a step of generating (E2) a probability map over regions of said image, consisting of applying a plurality of texture descriptors in order to generate for each pixel of said regions, a vector determining the response of said pixel for each of the descriptors of said plurality, then deducing therefrom a probability for each pixel of belonging to a nerve as a function of a probabilistic model;
- a classification step (E3) applied to areas determined by said probability map, consisting in searching for patterns, each corresponding to a type of nerve, in a window sliding over said areas, in granting a degree of confidence to each position of said window for each pattern and in retaining an optimal position for each pattern; then in analysing the consistency of these optimal positions by measuring their stability on a set of images of said series in order to select the window having the maximum consistency, said window corresponding to a detected nerve.

**2.** A method according to the preceding claim further comprising a step of contour extraction (E4) of said nerve detected within said window.

**3.** A method according to one of the preceding claims, comprising a preprocessing step (E1) for producing said regions, by eliminating other regions which cannot correspond to a nerve.

**4.** A method according to the preceding claim, wherein said preprocessing step (E1) comprises the elimination of areas corresponding to the skin of said image.

**5.** A method according to one of claims 3 or 4, wherein said preprocessing step comprises the removal of areas not corresponding to hyperechoic tissue.

**6.** A method according to one of the preceding claims, wherein said probabilistic model is a Gaussian mixture model.

**7.** A method according to one of the preceding claims, wherein said descriptors are based on Gabor filters.

**8.** A method according to any of claims 1 to 7, wherein said descriptors are adaptive median binary texture descriptors, AMBP.

**9.** A method according to one of the preceding claims, wherein in the classification step (E3) said models are constructed by a large margin separator method.

**10.** A computer program comprising code executable by digital equipment for carrying out the process according to one of the preceding claims.

**Fig. 1**

**Fig. 2**

| | | |
|---|---|---|
| 127 | 130 | 135 |
| 120 | 127 | 88 |
| 90 | 30 | 43 |

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **OUSSAMA HADJERCI ; ADEL HAFIANE ; DONATELLO CONTE ; PASCAL MAKRIS ; PIERRE VIERYRES ; ALAIN DELBOS.** Computer-aided détection system for nerve identification using ultrasound images : a comparative study. *Informatics in Medecing Unlocked,* 2016, vol. 3, 29-43
- On-line leaming dynamic models for nerve détection in ultrasound videos. **HADJERCI et al.** ICIP 2016. IEEE, 131-135
- **A. HAFIANE ; K. PALANIAPPAN ; G. SEETHARAMN.** Adaptive Median Binary Patterns for Texture Classification. *Pattern Recognition (ICPR), 2014, 22nd International Conference*
- **T. OJALA ; M. PIETIKÄINEN ; T. MÄENPÄÄ.** Multiresolution gray-scale and rotation invariant texture classification with local binary patterns. *IEEE Trans. Pattern Analysis and Machine Intelligence,* 2002, vol. 24 (7), 971-987

- **W. ZHANG ; S. SHAN ; W. GAO ; X. CHEN ; H. ZHANG.** Local Gabor binary-pattern histogram sequence (lgbphs): a novel non-statistical model for face représentation and recognition. *IEEE International Conf. Computer Vision,* 2005, 786-791
- **A. HAFIANE ; G. SEETHARAMAN ; K. PALANAIAPPAN ; B. ZAVIDOVIQUE.** Médian binary pattern for textures classification. *Lecture Notes in Computer Science (ICIAR),* 2008, vol. 5112, 619-629
- **A. HAFIANE ; P. VIEYRES ; A. DELBOS.** Phase-based probabilistic active contour » peuvent être employées, telles que décrites dans l'article « Phase-based probabilistic active contour for nerve détections in ultrasound images for régional anesthesia. *Computers in Biology and Medecine,* 2014, vol. 52, 88-95